# EUROPEAN PATENT APPLICATION

(11) **EP 2 804 389 A1**
(43) Date of publication of application: **19.11.2014**
(21) Application number: 13186509.9
(22) Date of filing: 27.09.2013
(51) Int. Cl.: H04N 21/422

(54) **Method and electronic device for controlling an electronic device**

(30) Priority: 15.05.2013 IN CH21392013
(71) Applicant: TP Vision Holding B.V., 5656 AE Eindhoven (NL)
(72) Inventor: Dominique, Charles, 1097 JB Amsterdam (NL); van Craenendonck, Toon, 1097 JB Amsterdam (NL); Bhatta, Ananthakrishna, 1097 JB Amsterdam (NL); van de Schepop, Bernardo, 1097 JB Amsterdam (NL); Kang, I-Chih, 1097 JB Amsterdam (NL)
(74) Representative: Busch, Patrick

(57) **Abstract**

The invention relates to a method for controlling an electronic device, for example a Web-TV or smart-TV via a communication network and a portable terminal comprising obtaining a state of the electronic device and displaying a first cluster of user input buttons corresponding to a first set of commands associated with the obtained state of the electronic device. This method enables the portable device to display a control screen corresponding to the obtained state of the Web- TV.

## Description

### TECHNICAL FIELD

The present invention relates to a method for controlling an electronic device via a communication network and a portable terminal for controlling an electronic device via a communication network.

### DESCRIPTION OF RELATED ART

Some TVs are provided with one or more applications that access the Internet. Such TVs are often indicated as IP-TVs, Web-TVs or Smart-TVs.

In order to control the TV in a conventional way a remote control as a separate electronic device is provided and dedicated to control one or more electronic devices such as TV set, DVD player or set-top box.

Presently, the function of the remote control device can also be incorporated in a portable terminal, such as a tablet, laptop computer or a smartphone, wherein the control functions are implemented in a software application.

These portable devices provide an extension to the user experience as these provide more options to the user than available hitherto when using only a conventional remote control. Due to the display screen these devices enable more features and functionality relating to the TV. An example of such functionality is streaming of video content on the portable terminal other feature are gaming.

For example, in case the user is watching the streaming of video content on the portable device and wishes to simultaneously control a TV feature, the user should navigate through a number of screens in order to arrive at the screen related to the wished control of the TV feature.

So, a drawback of these smart devices is these devices provide a large number of features to the users, in which conventional TV control is just one. The TV control application may have a large number of screens and navigating between the screens of one feature to a TV related feature can become cumbersome.

### SUMMARY OF THE INVENTION

It is an object of the invention to provide a method and device that improves the user interface application on the portable terminal.

According to a first aspect of the invention at least this object is achieved in a method for controlling an electronic device via a communication network and a portable terminal comprising obtaining a state of the electronic device and displaying a first cluster of user input buttons corresponding to a first set of commands associated with the obtained state of the electronic device. In this way a context aware control can be obtained. The electronic device, which can be a Web-TV, is connected via a communication network to the portable device, for example, a smart phone or tablet computer device. This method enables the portable device to display a control screen corresponding to the obtained state of the Web- TV. The control screen, which may comprise user input buttons, is selected automatically, corresponding to the functionality or features available the obtained state of the Web-TV. In case the Web-TV is switching to a different feature, the portable terminal can change the information of the control screen according to the new state of the IP-TV. The state of the electronic device may comprise an identification of the application that is currently active on the device, e.g. stored media playback, live TV, Internet browsing, Electronic Program Guide, or an identification of a menu currently being shown on a display controlled by the device, e.g. "Main Menu", "Source Selection", "Device Configuration", for example.

In an embodiment, the method comprises displaying a first icon on a screen associated to the electronic device on a screen of the portable terminal and receiving a first user input corresponding to the displayed icon. In this way, the user is notified of the availability of context aware control and can activity this feature when desired.

In a further embodiment, the method further comprises receiving an input relating to a selected one of the user input buttons and sending a command relating to the received input corresponding to the selected user input button to the TV.

In a different embodiment, the method further comprises receiving a second state from the electronic device. In this way, the control screen can be updated automatically on the portable device in accordance with the received actual state of the TV. For example, after a change in the state of the TV. The portable terminal may send a command to the electronic device requesting the electronic device to send a second state to the portable terminal.

In a further embodiment, the method comprises displaying a second cluster of user input buttons corresponding to a second set of commands associated with the second state. In this way the second cluster of user input buttons associated with the second state of the TV can be displayed.

In a different embodiment, the method comprises displaying content associated with another application of the portable terminal. In this way when the user is using the other application and the content of the other application can be displayed together with the icon on the portable device. The portable terminal can receive the user input associated with the first icon of the screen, and the first cluster of commands can be displayed on the display of the portable terminal together with the displayed content of the other application.

In a further embodiment, the method comprises overlaying the first cluster of user input buttons over the displayed content. In this way the user can still watch the displayed content when watching the user input buttons on the screen of the portable terminal.

In a further embodiment of the method, the content associated with the other application is displayed on a first portion of the screen and the first cluster of user input buttons is displayed on a second portion of the screen. In this way the user input buttons can be, for example, displayed beside the displayed content of the other application.

In a further embodiment of the method, the first portion of the screen is within the second portion of the screen. In this way the displayed content can be displayed for example, in a rectangle inside an area of displayed user input buttons. Depending on the size of the display one of the described display options can be selected.

In a different embodiment, the method further comprises providing a set of at least the first cluster and a second cluster of commands associated to different states of the TV, receiving at least one or more user inputs and displaying a cluster of user input buttons of the set according to the received user input. In this way the cluster of user input buttons according to the different states of the TV can be arranged in a set. One of the clusters in the set can be selected by providing one or more of user inputs along the screen, wherein the number of user inputs corresponds to the increase or decrease of the order number of the cluster in the set.

In a further embodiment the method comprises arranging the set of clusters in a ring-like manner, wherein the first cluster has a consecutive position with respect to a last cluster of the set. In this way an arrangement can be obtained in which a user can easily scroll through all the clusters in the set to find an appropriate cluster of the wished function of the TV.

In a further embodiment the method comprises indicating on the display the sequence number of the cluster in the set. In this way the user can be informed on the order number of the displayed cluster in the set. The user input can be a swipe or tap on the screen of the portable terminal

In a different embodiment the method comprises arranging the user input buttons of the displayed cluster on the screen in two-sub sets, a first sub-set associated with swipe commands and a second sub-set with user touch input commands, and displaying, in an operation position of the screen, wherein the screen is directed to the user, the first sub-set in an upper part of the screen and the second sub-set on the lower part of the screen. In this way the user can easy make swipes associated with the user buttons on the upper part of the screen when watching TV and can use the touch input associated with the input buttons at the lower side of the screen.

According to a second aspect of the invention this object is achieved in a portable terminal for controlling an electronic device in a communication network comprising a controller arranged to perform a method according to any one of the claims 1-10.

According to a third aspect of the invention this object is achieved in a computer program comprising computer program code means adapted to perform all the steps of any one of the method claims 1 to 10 when the computer program is run on a computer.

Further advantageous embodiments are defined in the dependent claims.

### BRIEF DESCRIPTION OF THE DRAWING

The above and other, more detailed aspects of the invention will be elucidated and described hereinafter, by way of example, with reference to the accompanying drawing. Therein:
Fig. 1 shows a flow chart representing the steps of the method according to an embodiment of the invention;
Fig. 2 shows a screen of the portable terminal wherein an icon indicating the Web-TV control is displayed beside another display area of the screen;
Fig. 3 shows a first configuration of the screen of the portable terminal according to an embodiment of the invention;
Fig. 4 shows a second configuration of the screen according to an embodiment of the invention;
Fig. 5 shows a representation of set of six subsequent clusters of user buttons ordered in a ring-like manner;
Fig. 6 shows a screen of the portable terminal on which a line of dots representing the different clusters, is displayed; and
Fig. 7 shows a block diagram of an exemplary system for implementing the present invention.

Throughout the figures like numerals refer to like elements.

### DETAILED DESCRIPTION OF THE PRESENT INVENTION

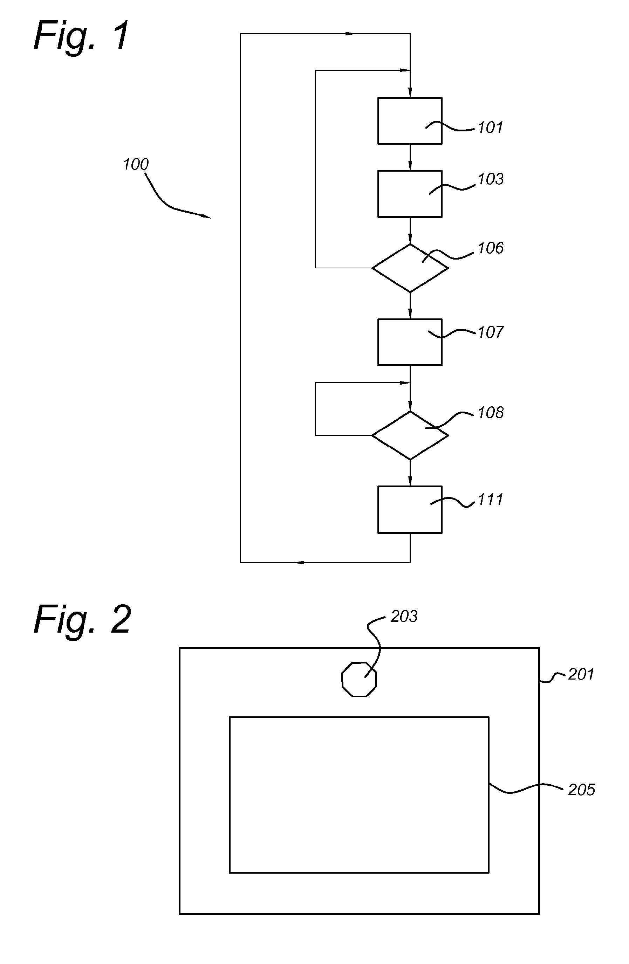

Fig. 1 displays a flowchart 100 representing steps in a method for controlling an electronic device via a communication network and a portable terminal according to an embodiment of the invention. In a first step 101, a present state of the electronic device, for example, a Web-TV or smart-TV is obtained. The present state can be stored in a memory of the portable terminal or can be obtained from the Web-TV via a communication network, for example, the internet or local area network, LAN. The portable terminal can be a tablet computer, mobile telephone or hand held computer. The Web-TV can have different states according to a number of features that are present in the Web-TV.

The present state of the TV is the status of the Web-TV in which a number of commands associated with the present state or feature can be executed. When the state of the Web-TV is obtained, in a second step 103, the portable device obtains the first cluster of associated commands of the first state from a memory and displays a first icon on the screen of the portable terminal, indicating to a user that the first cluster of user input buttons for controlling the features of the Web-TV is available. When a touch input associated with the first icon is received in step 105, the terminal displays the first cluster of user input buttons on the screen of the portable terminal in step 107 otherwise the portable terminal returns to step 101.

In a next step 109, when the portable terminal receives a touch input associated with one of the user buttons, the portable terminal sends a command corresponding to the received input to the Web-TV via a wireless network in step 111. As a result of the received command the state of the TV can be changed. The state of the TV can also be changed because a user has initiated other features of the TV using a conventional remote control device or a different electronic device connected to the TV, for example a DVD or Blu-ray player. The portable terminal can obtain an updated or actual state of the TV by sending a command to the electronic device for sending a second state to the portable terminal. A context aware control can thus be obtained. The Web-TV can send the changed state to the portable terminal via the Internet or via Wi-Fi as response. The portable terminal can obtain the changed or second state from the Web-TV again when returning in step 101 and obtain commands associated with a second cluster corresponding to the second state. In this way, the portable terminal is polling the Web-TV in order to obtain the actual state.

In a further embodiment the portable terminal can perform another application. This second application can be, for example, streaming content of a TV program, display of a website or display of a game screen on the portable terminal. Fig. 2 shows a screen 201 of the portable terminal wherein the icon 203 indicating the Web-TV control is displayed beside an area 205, wherein the content of the second application is displayed on the portable terminal. When a user input is received corresponding to the icon 203 the user input buttons can be displayed on the screen.

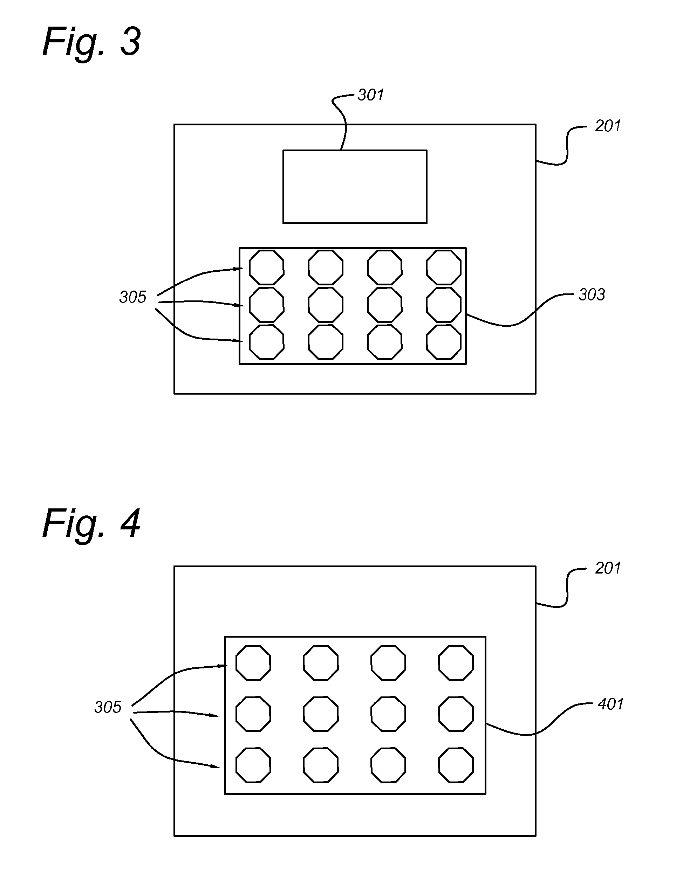

Fig. 3 shows a first configuration of the screen 201 of the portable terminal on which the user input buttons 305 are displayed in a first part 303 of the screen and the streaming content is displayed in a second part 301 beside the first part wherein the cluster of user buttons is displayed.

Fig. 4 shows an alternative configuration of the screen 201 wherein the cluster of user input buttons 305 is overlaid over the displayed application content in the area 401.

In an embodiment the clusters of user input buttons of different states of the Web-TV can be represented in a ring-like manner in a set of clusters.

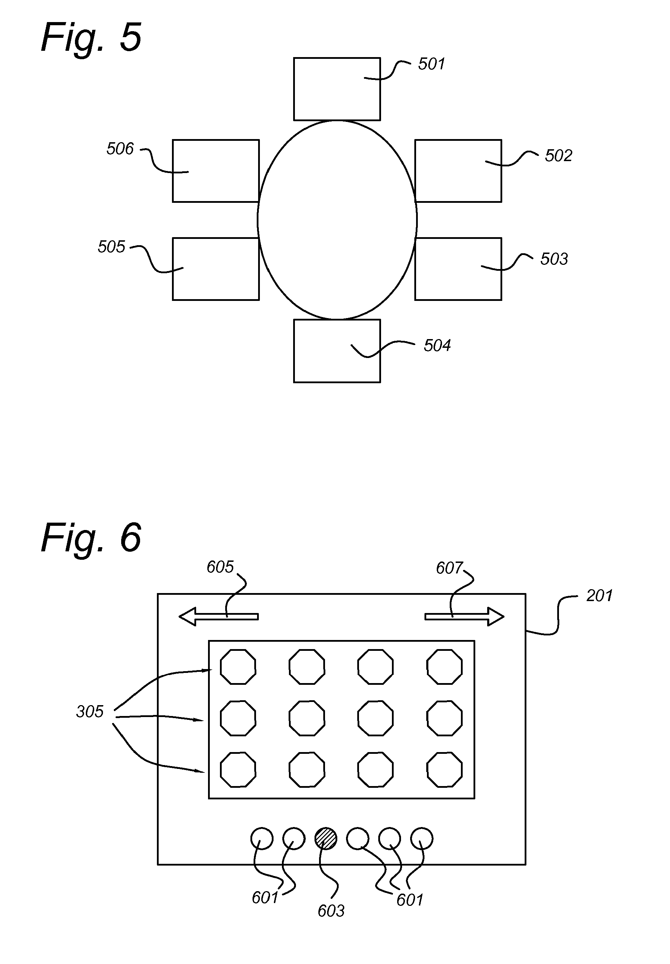

Fig. 5 shows a representation of set of six subsequent clusters 501-506 of user input buttons ordered in a ring-like manner. In this representation the first cluster 501 has a consecutive position with respect to a last cluster 506 of the set. This representation enables a user to easily select a cluster of commands of a desired state of the TV by inputting a input commands via a touch input screen, for example, swipe or tap commands. The number and direction of received swipes indicates the number of clusters of user input buttons that should be added or subtracted from the present order number of the displayed cluster to arrive at the order number of the wished cluster of user input buttons to be displayed.

In an embodiment the order number of the cluster being currently selected to control the features in a state of the Web-TV can be indicated on the screen. For example, the number of clusters can be represented by a series of dots arranged on a line on the screen. The portable device can highlight one dot of the series of dots of which the order number, count from left to right, corresponds with the order number of the cluster in the set actually displayed.

Fig. 6 shows a screen 201 of the terminal on which the line of dots 601, 603 representing the different clusters, is displayed and the single dot 603 of the series is highlighted representing the selected cluster.

Furthermore, Fig. 6 shows the user inputs buttons 605,607 on the upper part of the display associated with swipe commands and the user inputs buttons 305 on the lower part of the display associated with the touch or tap inputs on the screen 201. The user input buttons 305, 605, 607 can thus be arranged in two subsets. A first subset 605, 607 displayed on an upper part and a second subset 305 displayed on a lower part of the screen when the portable device and the screen 201 is held in an operation position directed to the user. An advantage of this arrangement is that the tap commands can be given by a user when he is looking to the TV.

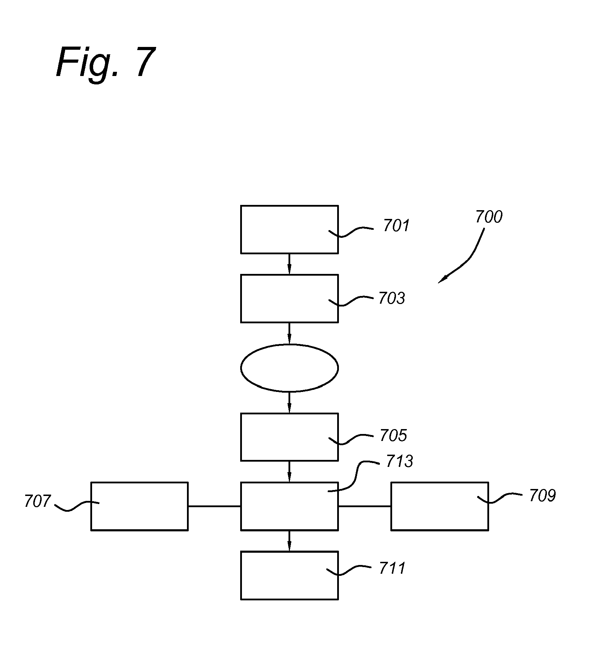

Fig. 7 shows a block diagram of an exemplary system 700 for implementing the present invention. The system comprises a Web-TV or Smart TV 701, which is a TV that can be controlled via a WLAN, or Internet. The Web-TV comprises also a communication device 703 connected to the WLAN or the Internet via a wire or wireless (WiFi).

Furthermore, the system comprises the portable terminal, for example a smart phone or tablet computer laptop computer, personal digital assistant or the like. The Smartphone can be connected to the internet via GSM, 3G. LTE or WLAN.

Furthermore Fig. 7 shows an block diagram of the portable terminal. The portable terminal comprises a memory 707 arranged to store user data and/or program data, a communication device 705 arranged to communicate via for example an 802.11 communication standard, a GSM, G3, LTE protocol, Bluetooth, Zigbee, and the Internet or other network. The portable terminal comprises a touch input screen 709. The touch input screen 709 can be a keyboard or a touch screen arranged to receive a user input. The touch input screen 709 can be coupled or overlaid with a display device 711. The display device 711 can be a liquid crystal display or an active matrix organic light emitting diode (AMOLED) display. The portable terminal further comprises a processor 713. The processor 713 is arranged to control the processor, the memory, (FLASH)ROM, the communication device, the touch input screen and the display.

It should be noted that the above-mentioned embodiments illustrate rather than limit the invention, and that those skilled in the art will be able to design many alternative embodiments without departing from the scope of the appended claims. Other variations to the disclosed embodiments can be understood and effected by those skilled in the art in practicing the claimed invention, from a study of the drawings, the disclosure and the appended claims, In the claims the word "comprising" does not exclude other elements or steps, and the indefinite article "a" or "an" does not exclude a plurality. A single processor or other unit may fulfil the functions of several item recited in the claims. The mere fact that certain messages are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. A method for controlling an electronic device via a communication network and a portable terminal comprising
obtaining a state of the electronic device;
displaying a first cluster of user input buttons corresponding to a first set of commands associated with the obtained state of the electronic device.

2. A method as claimed in claim 1, wherein the method further comprises displaying a first icon associated to the electronic device on a screen of the portable terminal; and
receiving a first user input corresponding to the displayed icon.

3. A method as claimed in claim 1 or 2, wherein the method further comprises receiving a user input relating to a selected one of the user input buttons; and
sending a command corresponding to the received user input to the electronic device.

4. A method as claimed in claim 1 or 2, wherein the method further comprises receiving a second state from the electronic device.

5. A method as claimed in claim 4, wherein the method further comprises displaying a second cluster of user input buttons corresponding to a second set of commands associated with the second state.

6. A method as claimed in one of the preceding claims, wherein the method further comprises displaying content associated with another application of the portable terminal on the screen.

7. A method as claimed in claim 6, wherein displaying the first cluster of user input buttons comprises overlaying the first cluster of user input button over the displayed content.

8. A method as claimed in claim 6, wherein the content associated with the other application is displayed on a first portion of the screen and the first cluster of user input buttons is displayed on a second portion of the screen.

9. A method as claimed in claim 8, wherein the first portion of the screen is within the second portion of the screen.

10. A method as claimed in any one of the claims 2- 9 wherein the method comprises arranging the user input buttons of the displayed cluster on the screen in two-sub sets, a first sub-set associated with swipe commands and a second sub-set with user touch input commands; and
displaying, in an operation position of the screen wherein the screen is directed to the user, the first sub-set in an upper part of the screen and the second sub-set on the lower part of the screen.

11. Portable terminal for controlling an electronic device via a communication network comprising a controller arranged to perform a method according to any one of the claims 1-10.

12. A computer program comprising computer program code means adapted to perform all the steps of any one of the method claims 1 to 10 when the computer program is run on a computer.
